# EUROPEAN PATENT APPLICATION

(11) **EP 4 791 083 A1**
(43) Date of publication of application: **12.08.2026**
(21) Application number: 24878876.2
(22) Date of filing: 09.10.2024
(51) Int. Cl.: H04W 40/02, H04L 65/1066

(54) **COMMUNICATION PATH DETERMINATION METHOD AND APPARATUS**

(30) Priority: 16.10.2023 CN 202311345353
(71) Applicant: HUAWEI TECHNOLOGIES CO., LTD., Shenzhen 518129 (CN)
(72) Inventor: ZHANG, Jidong, Shenzhen, Guangdong 518129 (CN); WU, Wenfu, Shenzhen, Guangdong 518129 (CN); ZHOU, Han, Shenzhen, Guangdong 518129 (CN); LI, Hancheng, Shenzhen, Guangdong 518129 (CN)
(74) Representative: Gill Jennings & Every LLP
(86) International application number: PCT/CN2024/123676
(87) International publication number: WO 2025/082232

(57) **Abstract**

A communication path determining method and an apparatus are provided. In the method, a first network element receives a path selection request sent by a session management network element, where the first path selection request is used to request to select a user plane network element for a session of a terminal device; the first network element selects the user plane network element for the session of the terminal device based on the path selection request and obtained network information, where the network information includes routing information of a data network connected to at least one user plane network element or routing information of a subnet connected to the terminal device; and the first network element sends information about the selected user plane network element to the session management network element. According to the foregoing method, in a mobile communication system, a user plane network element can also be selected for a terminal device based on routing information, thereby ensuring packet transmission of a user through a user plane network element or a transmission path between user plane network elements, and improving packet forwarding efficiency.

## Description

### CROSS-REFERENCE TO RELATED APPLICATIONS

This application claims priority to Chinese Patent Application No. 202311345353.0, filed with the China National Intellectual Property Administration on October 16, 2023 and entitled "COMMUNICATION PATH DETERMINING METHOD AND APPARATUS", which is incorporated herein by reference in its entirety.

### TECHNICAL FIELD

Embodiments of this application relate to the wireless communication field, and in particular, to a communication path determining method and an apparatus.

### BACKGROUND

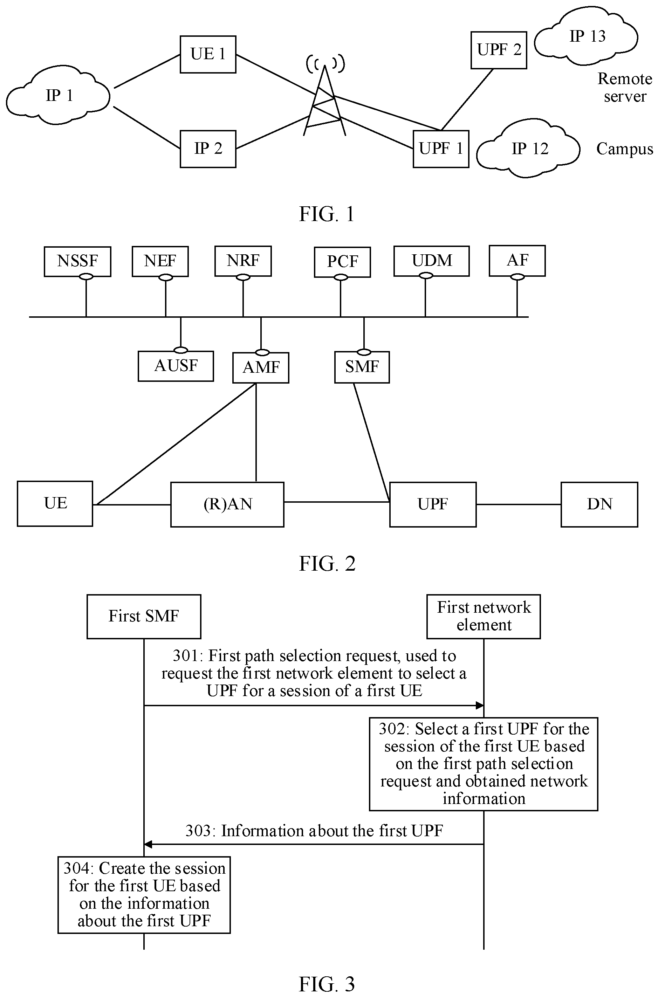

In a 5th generation system (5th generation system, 5GS), a user equipment (user equipment, UE) may access a core network of the 5GS via a radio access network (radio access network, RAN), to access a data network (data network, DN). As requirements of users on 5GS application scenarios change, the UE accessing the 5GS may be connected to a layer 2 (L2) or layer 3 (L3) network, or the DN may be a layer 2 (L2) or layer 3 (L3) network. The layer 3 (L3) network is used as an example in FIG. 1.

However, in the current 5th generation system (5th generation system, 5GS), a communication path cannot be selected based on a routing address (an address of the layer 2 or layer 3 network).

### SUMMARY

This application provides a communication path determining method and an apparatus, to select a communication path for a session of a terminal device based on routing information.

According to a first aspect, an embodiment of this application provides a communication path determining method. The method includes: A first network element receives a first path selection request sent by a first session management network element, where the first path selection request is used to request the first network element to select a first user plane network element for a session of a first terminal device; the first network element selects the first user plane network element for the session of the first terminal device based on the first path selection request and obtained network information, where the network information includes routing information of a data network connected to at least one user plane network element or routing information of a subnet connected to the first terminal device; and the first network element sends information about the selected first user plane network element to the first session management network element.

In the foregoing method, when the session management network element needs to create the session for the terminal device, the session management network element may send the path selection request to the first network element. The first network element selects a communication path, that is, selects the user plane network element, for the terminal device based on the obtained network information, and routing information of a data network to be accessed by the terminal device or the routing information of the subnet connected to the terminal device. In this way, in a mobile communication system, the user plane network element can also be selected for the terminal device based on the routing information, thereby ensuring packet transmission of a user through the user plane network element or a transmission path between user plane network elements, and improving packet forwarding efficiency.

In a possible implementation, that the first network element selects the first user plane network element for the session of the first terminal device based on the first path selection request and the obtained network information includes: The first network element selects the first user plane network element for the session of the first terminal device based on the first path selection request, the obtained network information, and obtained resource information, where the resource information includes one or more of the following information: bandwidth between network elements, a delay between the network elements, a correspondence between the bandwidth and the delay between the network elements, and load information. In this implementation, the first network element may not only select the user plane network element for the terminal device based on the network information, but also select the user plane network element for the terminal device based on the resource information, so that the selected user plane network element can not only forward a packet, but also meet requirements of the terminal device in terms of a delay, bandwidth, and the like.

In a possible implementation, the network information further includes one or more of the following information: a correspondence between different user plane network elements and different session management network elements, address information of an application server in a data network, and a compute resource that can be provided by the application server in the data network.

In a possible implementation, the method further includes at least one of the following: The first network element obtains the network information from a network data analytics function network element; the first network element obtains, from the first user plane network element, routing information of a data network connected to the first user plane network element; and the first network element obtains, from the first terminal device or the first user plane network element, the routing information of the subnet connected to the first terminal device. In this implementation, the first network element may obtain the network information from the network data analytics function network element, and may also obtain the network information from the first terminal device or the first user plane network element, to obtain network information that is more comprehensive.

In a possible implementation, the information about the first user plane network element includes at least one of the following: an identifier of the user plane network element, an identifier of a session management network element that manages the user plane network element, and a data network access identifier DNAI of the data network to be accessed by the first terminal device.

In a possible implementation, the first path selection request includes one or more of the following information: the routing information of the data network to be accessed by the first terminal device, the DNAI of the data network to be accessed by the first terminal device, an identifier of a network slice to which the data network to be accessed by the first terminal device belongs, an identifier of the first user plane network element selected by the first session management network element for the first terminal device, location information of the first terminal device, an application that the first terminal device requests to access, a compute resource required by the first terminal device, and resource information required by the application that the first terminal device requests to access.

In a possible implementation, the method further includes: The first network element sends the information about the selected first user plane network element to the network data analytics function network element. After selecting the first user plane network element for the first terminal device, the first network element may send the information about the first user plane network element to the network data analytics function network element, so that another network element configured to select a user plane network element can obtain network information that is more comprehensive from the network data analytics function network element, and the first network element can subsequently select a user plane network element based on the network information that is more comprehensive.

In a possible implementation, the first path selection request includes an identifier of the subnet connected to the first terminal device and/or an identifier of the first terminal device in the subnet.

In a possible implementation, that the first network element selects the first user plane network element for the session of the first terminal device based on the first path selection request and the obtained network information includes: The first network element determines, based on the identifier that is of the subnet and that is included in the first path selection request, a second user plane network element serving a session of a second terminal device, where the second terminal device is a terminal device accessing the subnet; and the first network element uses the second user plane network element serving the session of the second terminal device as the first user plane network element serving the session of the first terminal device. In this implementation, the first terminal device and the second terminal device access a same subnet. In this case, the first network element may select a same user plane network element for the first terminal device and the second terminal device, to facilitate packet forwarding by the user plane network element, and help implement load balancing.

In a possible implementation, the method further includes: The first network element receives a second path selection request sent by a second session management network element, where the second path selection request is used to request the first network element to select a second user plane network element for a session of a second terminal device, and the second path request includes the identifier of the subnet and/or an identifier of the second terminal device in the subnet; the first network element uses the first user plane network element selected for the session of the first terminal device as the second user plane network element serving the session of the second terminal device; and the first network element sends information about the second user plane network element to the second session management network element. In this implementation, the first terminal device and the second terminal device access a same subnet. In this case, the first network element may select a same user plane network element for the first terminal device and the second terminal device, to facilitate packet forwarding by the user plane network element, and help implement load balancing.

In a possible implementation, the method further includes: The first network element receives first session creation or change information sent by the first session management network element, where the first session creation or change information indicates that an uplink classifier ULCL is added to the session of the first terminal device; and the first network element sends second session change information to the second session management network element, where the second session management network element is a session management network element that manages the session of the second terminal device, and the second session change information indicates to add the ULCL to the session of the second terminal device. In this implementation, the first terminal device and the second terminal device access a same subnet. When the ULCL is added to or deleted from the session of the first terminal device, the first network element may indicate to add the same ULCL to or delete the same ULCL from the session of the second terminal device, thereby facilitating forwarding of a downlink packet by the ULCL and the user plane network element, and helping implement load balancing.

In a possible implementation, the second session change information includes a forwarding policy of the ULCL, the identifier of the first terminal device, or an identifier of the first session management network element.

In a possible implementation, the method further includes: The first network element receives third session change information sent by the second session management network element, where the second session management network element is a session management network element that manages the session of the second terminal device, and the third session change information indicates that a ULCL is added to the session of the second terminal device; and the first network element sends fourth session change information to the first session management network element, where the fourth session change information indicates to add the ULCL to the session of the first terminal device. In this implementation, the first terminal device and the second terminal device access a same subnet. When the ULCL is added to or deleted from the session of the second terminal device, the first network element may indicate to add the same ULCL to or delete the same ULCL from the session of the first terminal device, thereby facilitating forwarding of a downlink packet by the ULCL and the user plane network element, and helping implement load balancing.

In a possible implementation, the fourth session change information includes the forwarding policy of the ULCL, an identifier of the second terminal device, or an identifier of the second session management network element.

In a possible implementation, the method further includes: The first network element determines a forwarding policy of the first user plane network element based on the routing information of the subnet; and the first network element sends the forwarding policy to the first session management network element and/or the second session management network element, where the second session management network element is a session management network element that manages the session of the second terminal device. In this implementation, the first network element may further determine the forwarding policy of the first user plane network element and send the forwarding policy to the session management network element, so that the session management network element generates a downlink packet forwarding policy of the user plane network element according to the forwarding policy and sends the downlink packet forwarding policy to the user plane network element, so that the user plane network element forwards a downlink packet according to the downlink packet forwarding policy, thereby helping implement load balancing.

In a possible implementation, the forwarding policy includes: a correspondence between each session and an address in the subnet; or indication information indicating that the first user plane network element makes a decision.

According to a second aspect, an embodiment of this application provides a communication path determining method. The method includes: A first session management network element sends a first path selection request to a first network element, where the first path selection request is used to request the first network element to select a first user plane network element for a session of a first terminal device, and the first path request includes information about a data network to be accessed by the first terminal device, or includes information about a subnet connected to the first terminal device; the first session management network element receives information about the first user plane network element sent by the first network element; and the first session management network element creates the session for the first terminal device based on the information about the first user plane network element.

In a possible implementation, the information about the data network includes one or more of the following information: routing information of the data network, a DNAI of the data network, an identifier of a network slice to which the data network belongs, an application that the first terminal device requests to access, a compute resource required by the first terminal device, and resource information required by the application that the first terminal device requests to access.

In a possible implementation, the information about the subnet includes the identifier of the subnet and/or an identifier of the first terminal device in the subnet.

In a possible implementation, the first path request further includes an identifier of a second user plane network element selected by the first session management network element for the first terminal device, and/or location information of the first terminal device.

In a possible implementation, the method further includes: The first session management network element determines that a first uplink classifier ULCL is added to the session of the first terminal device; and the first session management network element sends first session change information to the first network element, where the first session change information indicates that the first ULCL is added to the session of the first terminal device.

In a possible implementation, the method further includes: The first session management network element receives second session change information sent by the first network element, where the second session change information indicates to add a second ULCL to the session of the first terminal device.

In a possible implementation, the second session change information includes a forwarding policy of the second ULCL, an identifier of a second terminal device, or an identifier of a second session management network element; the second terminal device is a terminal device accessing the subnet; and the second session management network element is a session management network element that manages a session of the second terminal device.

In a possible implementation, the method further includes: The first session management network element receives a forwarding policy of the first user plane network element sent by the first network element; and the first session management network element configures a downlink packet forwarding policy for the first user plane network element according to the forwarding policy.

In a possible implementation, before that the first session management network element receives the forwarding policy of the first user plane network element sent by the first network element, the method further includes: The first session management network element receives routing information of the subnet sent by the first terminal device and/or the first user network element; and the first session management network element sends the routing information of the subnet to the first network element.

In a possible implementation, before that the first session management network element receives the routing information of the subnet sent by the first terminal device and/or the first user network element, the method further includes: The first session management network element sends reporting indication information to the first terminal device and/or the first user plane network element, where the reporting indication information indicates to report the routing information of the subnet to the first session management network element.

In a possible implementation, the forwarding policy of the first user plane network element sent by the first network element includes: a correspondence between each session and an address in the subnet; or indication information indicating that the first user plane network element makes a decision.

According to a third aspect, an embodiment of this application provides a communication path determining method. The method includes: A first terminal device sends a session creation request to a first session management network element, to cause the first session management network element to determine a first user plane network element and establish a session for the first terminal device, where the session creation request includes one or more of the following information: an identifier of a subnet connected to the first terminal device, an identifier of the first terminal device in the subnet, indication information indicating that a type of the session requested to be created is a subnet session, and an identifier of another terminal device connected to the subnet; and the first terminal device sends a packet from the subnet to the first user plane network element.

In a possible implementation, the method further includes: The first terminal device sends routing information of the subnet to the first session management network element; or the first terminal device sends a routing protocol packet of the subnet to the first user plane network element.

In a possible implementation, the method further includes: The first terminal device receives reporting indication information sent by the first session management network element, where the reporting indication information indicates the first terminal device to report the routing information of the subnet to the first session management network element.

According to a fourth aspect, an embodiment of this application provides a communication path determining method. The method includes: A user plane network element receives a session creation or modification request sent by a first session management network element, where the first session creation or modification request includes an identifier of a subnet connected to a first terminal device, or includes indication information indicating that a to-be-created or to-be-modified session is a subnet-type session; and the user plane network element creates or modifies the session with the first terminal device based on the first session creation or modification request.

In a possible implementation, the method further includes: The user plane network element receives a second session creation or modification request sent by the first session management network element, where the second session creation or modification request is used to create or modify a session of a second terminal device, and the second session creation or modification request includes an identifier of the subnet, or includes indication information indicating that the to-be-created or to-be-modified session is a subnet-type session; the user plane network element creates or modifies the session with the second terminal device based on the second session creation or modification request; and the user plane network element sends a downlink packet whose target address belongs to the subnet to the first terminal device via the session with the first terminal device, or sends the downlink packet to the second terminal device via the session with the second terminal device.

In a possible implementation, the method further includes: The user plane network element receives a downlink packet forwarding policy sent by the session management network element; and that the user plane network element sends the downlink packet whose target address belongs to the subnet to the first terminal device via the session with the first terminal device, or sends the downlink packet to the second terminal device via the session with the second terminal device includes: The user plane network element sends, according to the downlink packet forwarding policy, the downlink packet whose target address belongs to the subnet to the first terminal device via the session with the first terminal device, or sends the downlink packet to the second terminal device via the session with the second terminal device.

In a possible implementation, the downlink packet forwarding policy includes: a correspondence between each session and an address in the subnet, or indication information indicating that the user plane network element makes a decision.

In a possible implementation, the method further includes: The user plane network element obtains routing information of the subnet based on an uplink packet from the subnet; and the user plane network element sends the obtained routing information to the first session management network element, to cause the first session management network element to determine the downlink packet forwarding policy.

In a possible implementation, the method further includes: The user plane network element receives reporting indication information sent by the first session management network element, where the reporting indication information indicates the user plane network element to report the obtained routing information of the subnet to the first session management network element.

According to a fifth aspect, an embodiment of this application provides a communication apparatus. The communication apparatus includes a processor, the processor is coupled to a memory, the memory is configured to store a program or instructions, and when the program or the instructions are executed by the processor, the apparatus is enabled to perform the method according to any one of the first aspect and the possible implementations of the first aspect.

According to a sixth aspect, an embodiment of this application provides a communication apparatus. The communication apparatus includes a processor, the processor is coupled to a memory, the memory is configured to store a program or instructions, and when the program or the instructions are executed by the processor, the apparatus is enabled to perform the method according to any one of the second aspect and the possible implementations of the second aspect.

According to a seventh aspect, an embodiment of this application provides a communication apparatus. The communication apparatus includes a processor, the processor is coupled to a memory, the memory is configured to store a program or instructions, and when the program or the instructions are executed by the processor, the apparatus is enabled to perform the method according to any one of the third aspect and the possible implementations of the third aspect.

According to an eighth aspect, an embodiment of this application provides a communication apparatus. The communication apparatus includes a processor, the processor is coupled to a memory, the memory is configured to store a program or instructions, and when the program or the instructions are executed by the processor, the apparatus is enabled to perform the method according to any one of the fourth aspect and the possible implementations of the fourth aspect.

According to a ninth aspect, a communication system is provided, and includes the communication apparatus according to the fifth aspect and the communication apparatus according to the sixth aspect. Further, the communication system may further include the communication apparatus according to the seventh aspect and/or the communication apparatus according to the eighth aspect.

According to a tenth aspect, an embodiment of this application provides a chip. The chip includes a processor, the processor is coupled to a memory, the memory is configured to store instructions, and when the instructions are executed by the processor, the chip is enabled to implement the method according to any one of the first aspect and the implementations of the first aspect, or implement the method according to any one of the second aspect and the implementations of the second aspect, or implement the method according to any one of the third aspect and the implementations of the third aspect, or implement the method according to any one of the fourth aspect and the implementations of the fourth aspect.

According to an eleventh aspect, an embodiment of this application provides a computer-readable storage medium. The computer-readable storage medium stores instructions, and when the instructions are run on a computer, the computer is enabled to perform the method according to any one of the first aspect and the implementations of the first aspect, or perform the method according to any one of the second aspect and the implementations of the second aspect, or perform the method according to any one of the third aspect and the implementations of the third aspect, or perform the method according to any one of the fourth aspect and the implementations of the fourth aspect.

According to a twelfth aspect, an embodiment of this application provides a computer program product including instructions. When the computer program product runs on a computer, the computer is enabled to perform the method according to any one of the first aspect and the implementations of the first aspect, or perform the method according to any one of the second aspect and the implementations of the second aspect, or perform the method according to any one of the third aspect and the implementations of the third aspect, or perform the method according to any one of the fourth aspect and the implementations of the fourth aspect.

For technical effects that can be achieved in any one of the fifth aspect to the twelfth aspect, refer to the corresponding technical effects that can be achieved in any one of the first aspect to the fourth aspect. Repeated parts are not described.

### BRIEF DESCRIPTION OF DRAWINGS

FIG. 1 is a diagram of a layer 3 network according to an embodiment of this application;
FIG. 2 is a diagram of a network architecture according to an embodiment of this application;
FIG. 3 is a schematic flowchart of a communication path selection method according to an embodiment of this application;
FIG. 4 is a schematic flowchart of a communication path selection method according to an embodiment of this application;
FIG. 5 is a schematic flowchart of a communication path selection method according to an embodiment of this application;
FIG. 6a and FIG. 6b-1 and FIG. 6b-2 are schematic flowcharts of a communication path selection method according to an embodiment of this application;
FIG. 7 is a schematic flowchart of a communication path selection method according to an embodiment of this application;
FIG. 8 is a schematic flowchart of a communication path selection method according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

A 5GS core network is divided into a control plane (control plane, CP) and a user plane (user plane, UP). The user plane is mainly responsible for data packet forwarding, QoS control, charging information statistics, and the like. The user plane may include a user plane function (user plane function, UPF), and the like. The control plane is mainly responsible for service procedure interaction, delivering a data packet forwarding policy, a QoS control policy, and the like to the user plane. The control plane may include an access and mobility management function (access and mobility management function, AMF), a session management function (session management function, SMF), a policy control function (policy control function, PCF), a unified data management (unified data management, UDM), a network exposure function (network exposure function, NEF), a network repository function (network repository function, NRF), a network slice selection function (network slice selection function, NSSF), and the like.

FIG. 2 is an example of a diagram of a 5G architecture to which an embodiment of this application is applicable. As shown in FIG. 2, the network architecture may include a UE, a RAN, an access and mobility management function (access and mobility management function, AMF), a session management function (session management function, SMF), a policy control function (policy control function, PCF), a unified data management (unified data management, UDM), a network exposure function (network exposure function, NEF), a network repository function (network repository function, NRF), a network slice selection function (network slice selection function, NSSF), an application function (application function, AF), a data network (data network, DN), and the like.

A radio access network (RAN) device is configured to implement a function related to radio access. The radio access network may also be referred to as an access network device or a base station, and is configured to access a terminal to a wireless network. The radio access network may be a base station (base station), an evolved NodeB (evolved NodeB, eNodeB) in an LTE system or an LTE-advanced system (LTE-advanced, LTE-A), a next generation NodeB (next generation NodeB, gNB) in a 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. The radio access network may alternatively be a module or a unit that completes some functions of the base station, for example, may be a central unit (central unit, CU) or a distributed unit (distributed unit, DU). A specific technology and a specific device form that are used by the radio access network are not limited in embodiments of this application. In the following embodiments, an example in which the radio access network is referred to as the access network device is used for description. For ease of description, a RAN is used as an example for description in the following embodiments of this application.

A terminal device is a device that has a wireless transceiver function. The terminal device is connected to the radio access network device in a wireless manner, to access a communication system. The terminal device may also be referred to as a terminal, a UE, a mobile station, a mobile terminal, or the like. The terminal device may be a mobile phone, a tablet computer, a computer with a wireless transceiver function, a virtual reality (virtual reality, VR) terminal, an augmented reality (augmented reality, AR) terminal, a wireless terminal in industrial control (industrial control), a vehicle, a wireless communication module in a vehicle, a telematics box (telematics box, T-box), a road side unit (road side unit, RSU), a terminal device in self driving, a terminal device in an internet of things (internet of things, IoT) network, a terminal device in remote medical (remote medical), a terminal device in smart grid (smart grid), a terminal device in transportation safety (transportation safety), a terminal device in smart city (smart city), a terminal device in smart home (smart home), or the like. This is not limited in embodiments of this application. For ease of description, the UE is used as an example for description in the following embodiments of this application.

A mobility management network element is a control plane network element provided by an operator network, and is responsible for access control and mobility management for accessing the operator network by the terminal device, for example, including functions such as mobility status management, allocation of a temporary user identity, and user authentication and authorization. In 5G, the mobility management network element may be an AMF. In a future communication system, the mobility management network element may still be an AMF, or may have another name. This is not limited in this application. For ease of description, the AMF is used as an example for description in the following embodiments of this application.

A session management network element is a control plane network element provided by the operator network, and is responsible for managing a protocol data unit (protocol data unit, PDU) session of the terminal device. The PDU session is a channel for PDU transmission, and the terminal device and the DN need to transmit the PDU to each other via the PDU session. The SMF network element is responsible for establishment, maintenance, deletion, and the like of the PDU session. The session management network element includes session-related functions such as session management (for example, session establishment, modification, and release, including maintenance of a tunnel between a user plane network element and the access network device), selection and control of the user plane network element, service and session continuity (service and session continuity, SSC) mode selection, and roaming. In 5G, the session management network element may be an SMF. In a future communication system, the session management network element may still be an SMF, or may have another name. This is not limited in this application. For ease of description, the SMF is used as an example for description in the following embodiments of this application.

The user plane network element is a gateway provided by an operator, and is a gateway for communication between the operator network and the DN. The user plane network element includes user plane-related functions such as data packet routing and transmission, packet detection, service usage reporting, quality of service (quality of service, QoS) processing, uplink packet detection, and downlink data packet storage. In 5G, the user plane network element may be a UPF. In a future communication system, the user plane network element may still be a UPF, or may have another name. This is not limited in this application. For ease of description, the UPF is used as an example for description in the following embodiments of this application.

A policy control network element is a control plane function provided by the operator, and is configured to provide a policy of the PDU session for the session management network element. The policy may include a charging-related policy, a QoS-related policy, an authorization-related policy, and the like. In 5G, the policy control network element may be a PCF. In a future communication system, the policy control network element may still be a PCF, or may have another name. This is not limited in this application. For ease of description, the PCF is used as an example for description in the following embodiments of this application.

An application function network element is configured to transfer a requirement of an application side for a network side, for example, a clock service requirement, a quality of service (quality of service, QoS) requirement, a charging policy requirement, a routing policy requirement, or user status event subscription. The application function network element may be a third-party function entity, or may be an application server deployed by the operator. In 5G, the application function network element may be an AF. In a future communication system, the application function network element may still be an AF, or may have another name. This is not limited in this application. For ease of description, the AF is used as an example for description in the following embodiments of this application.

A network exposure function network element is configured to provide a network function of opening to the outside and providing a standard interface. A communication system may expose functions and events to another system via the network exposure function network element, to provide openness and ensure system security. In 5G, the network exposure function network element may be an NEF. In a future communication system, the network exposure function network element may still be an NEF, or may have another name. This is not limited in this application.

When interacting with a core network, an application function entity of a third-party application may perform authorization processing via an NEF. For example, the AF sends a request message to the NEF, and the NEF determines whether the AF is allowed to send the request message. If verification succeeds, the NEF forwards the request message to a corresponding PCF or UDM.

A network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be an NRF network element. In future communication, the network repository function network element may still be an NRF network element, or may have another name. This is not limited in this application.

It should be understood that FIG. 2 is merely an example of an applicable network architecture, and an actually applied network architecture may include more or fewer network elements than those in FIG. 2. For example, the architecture may further include a network data analytics function (network data analytics function, NWDAF), a unified data repository (unified data repository, UDR), a network slice selection function (network slice selection function, NSSF), and an authentication server function (authentication server function, AUSF).

In a scenario shown in FIG. 1, a packet sent from a network to which an IP 1 belongs to a network to which an IP 3 belongs may be sent to a UPF 1 via a session of a UE 1 or a UE 2. According to a current packet forwarding rule, the UPF 1 sends the packet to a network to which an IP 2 belongs, and then the packet is sent from the network to which the IP 2 belongs to the network to which the IP 3 belongs. This packet forwarding mode has poor efficiency and needs to be improved.

In view of this, an embodiment of this application provides a communication path selection method, to determine a transmission path when a data network connected to a UPF side is a layer 2 network or a layer 3 network, thereby improving transmission efficiency.

FIG. 3 is a schematic flowchart of a communication path selection method according to an embodiment of this application. The method may include the following steps.

Step 301: A first SMF sends a first path selection request to a first network element, where the first path selection request is used to request the first network element to select a UPF for a session of a first UE.

The first network element in this embodiment of this application is a network element configured to select a communication path. The first network element may be an independently deployed physical device. Alternatively, the first network element may be a logical device, and may be integrated with another network element. For example, the first network element may be integrated with an SMF.

Optionally, the first SMF may send the first path selection request to the first network element based on a session creation request of the first UE after receiving the session creation request sent by the first UE, to request the first network element to select the UPF for the session of the first UE. Alternatively, the first SMF may send the first path selection request to the first network element when the first SMF obtains another data network that may be accessed by the first UE.

In some embodiments, the first path selection request may include one or more of the following information: routing information of the data network that may be accessed by the first UE, a name (data network name, DNN) (or another identifier) of the data network that may be accessed by the first UE, a data network access identifier (data network access identifier, DNAI) of the data network that may be accessed by the first UE, an identifier of a network slice to which the data network that may be accessed by the first UE belongs, an identifier of an anchor UPF selected by the first SMF for the first UE, location information of the first UE, an application that the first UE requests to access, a compute resource required by the first UE, and resource information required by the application that the first UE requests to access.

For example, in the scenario shown in FIG. 1, the UE 1 is to access the network to which the IP 1 belongs and the network to which the IP 2 belongs. In this case, the first path selection request may include routing information of the network to which the IP 1 belongs and routing information of the network to which the IP 2 belongs. The routing information of the network to which the IP 1 belongs may be information such as an IP address segment and an IP address prefix of the network to which the IP 1 belongs. If the UE 1 accesses a data network 3, and the data network 3 is a layer 2 network, routing information of the data network 3 may be information such as a media access control address (media access control address, MAC address) of the data network 3.

In addition, the first path request may further include a user transmission requirement of the first UE, for example, a bandwidth requirement or a delay requirement.

One or more types of information included in the first path request may be included in the session creation request sent by the first UE, or may be further determined by the first SMF based on the session creation request sent by the first UE.

Step 302: The first network element selects a first UPF for the session of the first UE based on the first path selection request and obtained network information. The network information includes a data network connected to at least one UPF.

Optionally, the network information may further include a correspondence between a UPF and an SMF, and/or a correspondence between the UPF and the first network element, or a correspondence between the SMF and the first network element. For example, an SMF 1 manages a UPF 1 and a UPF 2, an SMF 2 manages a UPF 3 and a UPF 4, a first network element 1 manages the UPF 1, the UPF 2, the UPF, and the UPF 4, and the SMF 1 and the SMF 2 are connected to the first network element 1. The network information may also include address information of an application server in a data network. The network information may further include a compute resource that can be provided by the application server in the data network, and the like.

In a possible implementation, the first network element may obtain network information in advance, to select a first UPF for a session of each UE. The first network element may obtain the network information after going online; or the first network element may obtain the network information periodically, to obtain latest network information in a timely manner; or the first network element may obtain the network information when a trigger event occurs, for example, obtain new network information when the network information changes. For example, the first network element may send a request message to an NWDAF after going online, to request to obtain network information. The NWDAF may send stored or generated network information or network information of an area in which the first network element is located to the first network element. Optionally, the request message sent by the first network element may include information about a service area, indicating to request to obtain information about a data network connected to at least one UPF in the service area. Alternatively, the request message sent by the first network element may include information such as a DNN, single network slice selection assistance information (single network slice selection assistance information, S-NSSAI), a UPF identifier, an application identifier, or a compute resource identifier, so that the NWDAF sends network information corresponding to the information included in the request message.

In another possible implementation, the first network element may obtain corresponding network information based on the first path selection request after receiving the first path selection request sent by the first SMF. For example, the first network element may determine, based on the first path selection request, the name (the DNN) of the data network that may be accessed by the first UE, the identifier of the anchor UPF of the first UE, the S-NSSAI of the network slice to which the data network that may be accessed by the first UE belongs, the identifier of the application that the first UE requests to access, the resource information required by the application that the first UE requests to access, or the like, and include the determined information in a request message sent to an NWDAF, so that the NWDAF sends network information corresponding to the information included in the request message.

In still another possible implementation, the first network element may alternatively obtain network information from a UPF and/or a UE. For example, the UPF and/or the UE may determine an association relationship between the UPF and the data network when establishing a session or forwarding a packet, and report the association relationship to the first network element. When reporting the association relationship to the first network element, the UE may report the association relationship to the first network element via the SMF. The UPF may autonomously report the association relationship to the first network element, or may report the association relationship to the first network element via the SMF.

Optionally, the first network element may further obtain resource information in addition to the network information. The resource information may include bandwidth between network elements, a delay between the network elements, a correspondence between the bandwidth and the delay between the network elements, load information of each network element, and the like. As described above, the first path selection request may include the resource information required by the application that the first UE requests to access. In this case, the first network element may select an appropriate first UPF for the first UE based on the obtained network information and the resource information. For example, the first path selection request may include the name of the data network to be accessed by the first UE, a requirement on a transmission delay, and the like. The first network element determines, based on the network information, a UPF connected to the data network, and a transmission delay between network elements, and determines to select, for the session of the first UE for accessing the data network, the first UPF that can meet the requirement of the first UE.

When requesting the first network element to select the first UPF for the session of the first UE, the first SMF may have configured an anchor UPF or an uplink classifier (uplink classifier, ULCL) for the first UE, but the anchor UPF or the ULCL of the first UE may not be connected to a data network to be accessed by the first UE. In this case, the first network element may determine the first UPF based on the obtained network information and/or resource information, so that the anchor UPF or the ULCL of the first UE establishes a user plane path with the determined first UPF, to perform packet transmission for the first UE.

Step 303: The first network element sends information about the selected first UPF to the first SMF.

After selecting the first UPF for the session of the first UE, the first network element may send the information about the first UPF to the first SMF. Optionally, the information about the first UPF may include one or more of the following information: an identifier of the first UPF, an identifier of an SMF that manages the first UPF, and a DNAI of the data network that may be accessed by the first UE.

Step 304: The first SMF creates the session for the first UE based on the information about the first UPF.

After obtaining the information about the first UPF, the first SMF may create the session for the first UE based on the information about the first UPF. For example, after obtaining the identifier of the first UPF, the first SMF may send a session creation/modification request to the corresponding first UPF. Alternatively, the first SMF may send a request to a corresponding second SMF based on the obtained identifier of the second SMF that manages the first UPF, to request the second SMF to assist in establishing the session between the first UE and the first UPF. Alternatively, the first SMF may determine, based on the obtained DNAI, the first UPF connected to the data network, and then send a session creation/modification request to the corresponding first UPF.

Optionally, after performing step 303, the first network element may further send the information about the selected first UPF to the NWDAF, so that the NWDAF can update the network information.

According to the foregoing communication path selection method, even if the SMF selects an anchor UPF for the UE, the first network element may select a UPF for the session of the UE based on the routing information, so that the anchor UPF and the UPF selected by the first network element for the UE forward a packet, thereby ensuring packet transmission of the user through a transmission path between UPFs, and improving packet forwarding efficiency.

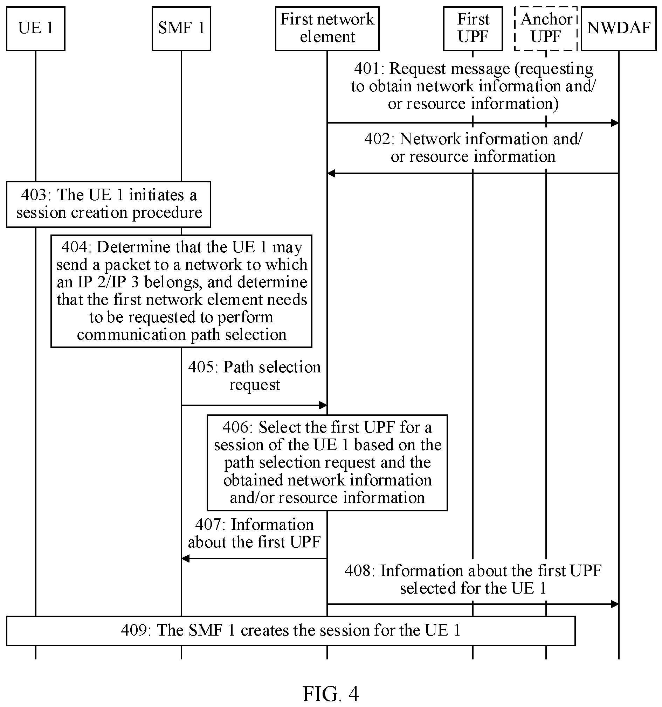

For clearer understanding of the foregoing embodiment of this application, the following provides descriptions by using an example with reference to FIG. 4. A procedure of a communication path selection method shown in FIG. 4 may include the following steps.

Step 401: A first network element sends a request message to an NWDAF, to request to obtain network information and/or resource information.

The first network element requests to obtain the network information and/or the resource information, so as to subsequently select a communication path for a UE based on the network information and/or the resource information.

Optionally, the request message may include information such as a DNN, S-NSSAI, a service area, a device identifier (for example, a UPF identifier), an application identifier, or a compute resource identifier, to request to obtain network information and/or resource information corresponding to the foregoing information.

Step 401 is optional. The first network element may not need to send the request message to the NWDAF, and the NWDAF may actively send the network information and/or the resource information to the first network element periodically or when a trigger event occurs.

Step 402: The NWDAF sends the network information and/or the resource information to the first network element.

When the request message sent by the first network element includes the information such as the DNN, S-NSSAI, the service area, the device identifier (for example, the UPF identifier), the application identifier, or the compute resource identifier, the NWDAF sends, to the first network element, the network information and/or the resource information corresponding to the foregoing information. When the request message sent by the first network element does not include the foregoing information, the NWDAF may send all network information and/or resource information to the first network element, or the NWDAF may send, to the first network element based on service area information that is of the first network element and that is obtained in advance, network information and/or resource information corresponding to the service area information.

When the first network element does not need to perform step 401, the NWDAF may actively send the network information and/or the resource information to the first network element when the first network element goes online, or may send the network information and/or the resource information to the first network element periodically or when a trigger event occurs.

In a possible design, when the first network element does not need to perform step 401, the NWDAF may alternatively not perform step 402, and the first network element may alternatively obtain network information from the UE or a UPF.

Step 403: A UE 1 initiates a session creation procedure.

Optionally, in a session creation process, an SMF may determine an anchor UPF or a ULCL for the UE 1. In the embodiment shown in FIG. 4, the anchor UPF of the UE 1 is a UPF 1.

Step 404: An SMF 1 determines that the UE 1 may send a packet to a network to which an IP 2/IP 3 belongs, and determines that the first network element needs to be requested to perform communication path selection.

For example, when the UE 1 performs application addressing, the SMF 1 may determine, based on an application address requested by an application or the address IP 2/IP 3 corresponding to an application service, that the current application is a service that is subscribed to by a user and for which a forwarding path needs to be created. Alternatively, the SMF 1 may determine, based on the address IP 2/IP 3 corresponding to an application service, that the address is an address for which a new forwarding path needs to be created; or determine, based on an application type and a slice, that a current application is a service for which path selection needs to be requested. Alternatively, the SMF 1 may determine, based on information such as a network to which the IP 2/IP 3 belongs or an application address, that cross-domain access is performed (that is, an area that cannot be currently managed by the SMF 1 is accessed, or wide area access is performed), and determine that communication path selection needs to be requested.

Step 405: The SMF 1 sends a path selection request to the first network element.

Optionally, the path selection request may include information such as an address, an address segment, and a prefix of a network to which the IP 2 or the IP 3 belongs, or may include S-NSSA, the identifier of the anchor UPF 1 selected by the SMF 1 for the UE 1, access location information of the UE 1, a DNAI of the network to which the IP 2/IP 3 belongs, an application that the UE 1 requests to access, a compute resource required by the application that the UE 1 requests to access, a transmission requirement of the UE 1, and the like.

Step 406: The first network element selects a first UPF for the session of the UE 1 based on the path selection request and the obtained network information and/or resource information.

For example, the first network element determines, based on the information included in the path selection request, the network to which the IP 2/IP 3 belongs and that may be accessed by the UE 1, and then determines, based on the obtained network information, that the UPF 1 is connected to the network to which the IP 2 belongs and a UPF 2 is connected to the network to which the IP 3 belongs. In this case, the first network element may select the UPF 1 and the UPF 2 for forwarding a packet of the UE 1. In other words, the selected first UPF includes the UPF 1 and the UPF 2.

For another example, the first network element determines, based on the information included in the path selection request, the network to which the IP 2/IP 3 belongs and that may be accessed by the UE 1 and a transmission requirement, such as a transmission delay and a transmission bandwidth, when the UE 1 accesses the network to which the IP 2/IP 3 belongs. Then, the first network element determines, based on the obtained network information, that the UPF 1 is connected to the network to which the IP 2 belongs, a UPF 2 is connected to the network to which the IP 3 belongs, and current available bandwidth and a transmission delay between the UPF 1 and the UPF 2 can meet a transmission requirement of the UE 1. In this case, the first network element may select the UPF 1 and the UPF 2 to forward a packet of the UE 1.

Step 407: The first network element sends information about the first UPF to the SMF 1.

For example, if the first UPF selected by the first network element is the UPF 1, the first network element may send the identifier of the UPF 1, a DNAI corresponding to the UPF 1, and the like to the SMF 1.

Step 408: The first network element sends the information about the first UPF selected for the UE 1 to the NWDAF. This step is optional.

The first network element may send information about the UPF 1/UPF 2 selected for the session of the UE 1 to the NWDAF, so that the NWDAF obtains information about a network resource used by the UPF 1/UPF 2 to forward a packet between the UE 1 and the network to which the IP 2/IP 3 belongs. Therefore, when subsequently the first network element or another network element configured to perform path selection obtains the network information and/or the resource information from the NWDAF, the NWDAF may select a path network element based on obtained related resource usage information, and sends the selected path network element to the first network element or the another network element configured to perform path selection.

Step 409: The SMF 1 creates the session for the UE 1.

For example, the first network element selects the UPF 1 and the UPF 2 for the UE 1, and the SMF 1 may create a user plane path between the UE 1 and the UPF 1, and create a user plane path between the UPF 1 and the UPF 2; or the SMF 1 may use the UPF 1 as a ULCL for the session of the UE 1, and create a user plane path between the UE 1, the UPF 1, and the UPF 2. Specifically, the SMF 1 may allocate a tunnel identifier to the UPF 1 or the UPF 2, provide the tunnel identifier of the UPF 1 for a RAN, provide the RAN and the tunnel identifier of the UPF 2 for the UPF 1, and provide the tunnel identifier of the UPF 1 for the UPF 2. The SMF configures an uplink/downlink packet forwarding policy for the UPF 1 and the UPF 2, indicates the UPF 1 to transmit, to the UPF 2, a packet sent by the UE 1 to the network to which the IP 3 belongs, and indicates the UPF 2 to transmit, to the UPF 1, a packet sent by the network to which the IP 3 belongs to the UE 1.

Optionally, if an SMF that manages the UPF 2 is not the SMF 1, when creating a session, the SMF 1 may further determine an SMF 2 that manages the UPF 2, and create a user plane path between the UPF 1 and the UPF 2 by using the SMF 2, and configure an uplink/downlink packet forwarding policy for the UPF 2.

On the other hand, in the scenario shown in FIG. 1, for the UE 1 (or the UE 2) connected to a subnet, currently, there is no solution of selecting a communication path based on subnet routing information. In view of this, an embodiment of this application further provides a communication path selection method, to select a communication path based on subnet routing information, optimize a transmission path, and improve transmission efficiency.

In this embodiment of this application, a "subnet" is not limited to a subordinate network of a network, but refers to a network or a device within a specific range (a physical range or a logical range). For example, the subnet may be a network including a plurality of devices, or may be a logical network including a plurality of devices that can communicate with each other, or may be a network including a plurality of devices that can communicate with each other.

In this embodiment, in addition to accessing a mobile communication network, for example, the 5G network shown in FIG. 2, a UE may further access a layer 2 or layer 3 subnet, for example, a home local area network, so that another device in the home local area network can communicate with a data network via the 5G network, or communicate with data in another subnet via the 5G network.

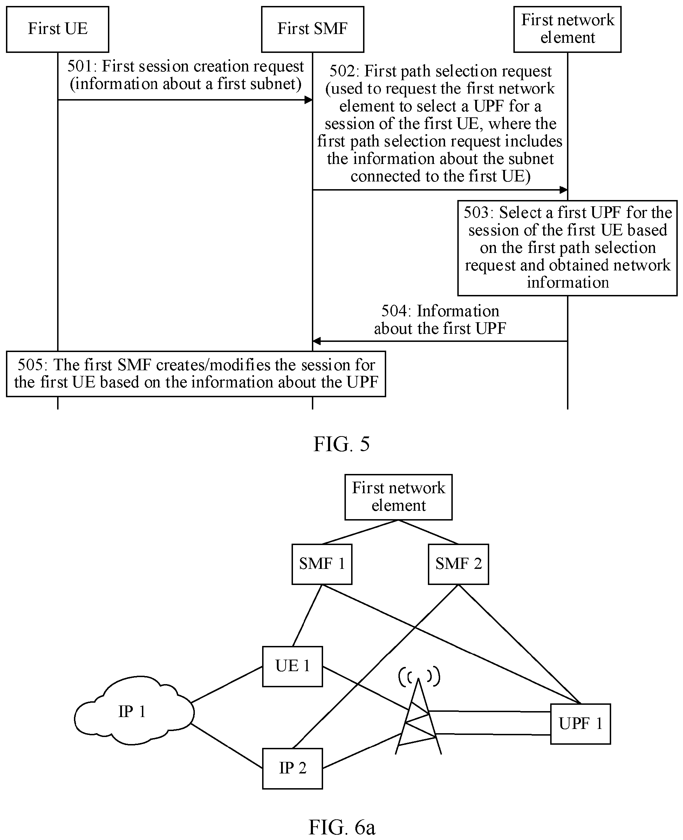

FIG. 5 is a schematic flowchart of a communication path selection method according to an embodiment of this application. The method may include the following steps.

Step 501: A first UE sends a first session creation request to a first SMF, where the first session creation request includes information about a first subnet.

The information about the first subnet includes one or more of the following information: an identifier of the first subnet connected to the first UE, an identifier of the first UE in the first subnet, indication information indicating that a type of a session requested to be created is a subnet session, and an identifier of another UE connected to the first subnet.

After receiving the first session creation request, the first SMF may determine, based on the information about the first subnet included in the first session creation request, that the first UE is connected to the first subnet, and that a session of a subnet session type needs to be created for the first UE.

Step 502: The first SMF sends a first path selection request to a first network element, where the first path selection request is used to request the first network element to select a UPF for the session of the first UE, and the first path request includes the information about the subnet connected to the first UE.

The first network element in this embodiment is a network element configured to select a communication path. The first network element may be an independently deployed physical device. Alternatively, the first network element may be a logical device, and may be integrated with another network element. For example, the first network element may be integrated with an SMF.

When the first UE is connected to the subnet, when obtaining the communication path for the first UE, the first SMF may include, in the first path selection request, the information about the subnet connected to the first UE. The information about the subnet connected to the first UE may include routing information of the subnet, the identifier of the subnet, the identifier of the first UE in the subnet, and the like. The routing information of the subnet may be information such as an IP address segment, an IP address prefix, and a MAC address of the subnet. The identifier of the first UE in the subnet may include address information of the first UE in the subnet, and the like. For example, when the subnet is a layer 3 subnet, the identifier of the first UE in the subnet may be information about an IP address or an address segment of the first UE in the subnet. Information such as an IP address prefix or an IP address segment of the subnet may be determined based on the information about the IP address or the address segment of the UE in the subnet.

In addition, the first path request may further include a user transmission requirement of the first UE, for example, a bandwidth requirement or a delay requirement, so that the first network element selects the UPF for the session of the first UE based on the user transmission requirement of the first UE, for example, the bandwidth requirement or the delay requirement.

One or more types of information included in the first path request may be included in the session creation request sent by the first UE, or may be further determined by the first SMF based on the session creation request sent by the first UE.

Step 503: The first network element selects a first UPF for the session of the first UE based on the first path selection request and obtained network information.

The network information may include information about a subnet connected to another UE. The network information obtained by the first network element may be stored after the first network element selects a UPF for a session of another UE, or may be reported by another UE to the first network element via an SMF, or may be sent by a UPF to the first network element via an SMF, or may be directly reported by a UPF to the first network element.

Different UEs can access different subnets or the same subnet. The first network element may obtain information about a subnet connected to a UE and the information about the subnet connected to the first UE, and select the first UPF for the session of the first UE. For example, both a UE 1 and a UE 2 are connected to a subnet to which an IP 1 belongs, the UE 1 has established a session, and a UPF 1 forwards a packet of the UE 1. The packet of the UE 1 includes a packet that is transmitted via the UPF 1 and that is from the subnet to which the IP 1 belongs or a packet that is sent to the subnet to which the IP 1 belongs. In this case, when the UE 2 establishes a session, the first network element may preferentially select the UPF 1 for the session of the UE 2, and the UPF 1 forwards packets of the UE 1 and the UE 2, so that all packets of the subnet to which the IP 1 belongs are forwarded by the UPF 1 as much as possible.

Optionally, the first network element may further obtain resource information in addition to the network information. The resource information may include bandwidth between network elements, a delay between the network elements, a correspondence between the bandwidth and the delay between the network elements, load information of each network element, and the like. As described above, the first path selection request may include resource information required by an application that the first UE requests to access. In this case, the first network element may select an appropriate first UPF for the first UE based on the obtained network information and resource information. For example, the first path selection request may include a name of a data network to be accessed by the first UE, a requirement on a transmission delay, and the like. The first network element may further determine, based on the network information, the information about the subnet connected to the first UE and a transmission delay between network elements, and select the first UPF for the session of the first UE.

Step 504: The first network element sends information about the selected first UPF to the first SMF.

After selecting the first UPF for the session of the first UE, the first network element may send the information about the first UPF to the first SMF. Optionally, the information about the first UPF may include one or more of the following information: an identifier of the first UPF, an identifier of an SMF that manages the first UPF, and a DNAI of the data network that may be accessed by the first UE.

Optionally, after performing step 504, the first network element may further send the information about the selected first UPF to an NWDAF, so that the NWDAF can update the network information.

Step 505: The first SMF creates/modifies the session for the first UE based on the information about the first UPF.

After obtaining the information about the first UPF, the first SMF may create the session or modify the session for the first UE based on the information about the first UPF. For example, after obtaining the identifier of the first UPF, the first SMF may send a session creation/modification request to the corresponding first UPF. Alternatively, the first SMF may send a request to a corresponding second SMF based on an obtained identifier of the second SMF that manages the first UPF, to request the second SMF to assist in establishing a session on the first UPF for the first UE. Alternatively, the first SMF may determine, based on the obtained DNAI, the first UPF connected to the data network, and then send a session creation/modification request to the corresponding first UPF.

After each of the first UE and a second UE connected to a same subnet establishes a session, if a ULCL is added to or deleted from a session of one of the UEs, the same ULCL may also be correspondingly added to or deleted from a session of the other UE, so that the first UPF forwards a packet of the subnet. For example, if a ULCL is added to a session of the first UE (or the second UE), the same ULCL may also be added to a session of the second UE (or the first UE).

In a specific embodiment, if the first SMF determines that a first ULCL is added to or deleted from the session of the first UE, the first SMF may send first session change information to the first network element, to indicate that the first ULCL is added to or deleted from the session of the first UE. After receiving the first session change information, the first network element may send second session change information to a serving SMF of the second UE, to indicate the SMF serving the second UE to add the first ULCL to or delete the first ULCL from the session of the second UE. After receiving the second session change information, the SMF serving the second UE adds the first ULCL to or deletes the first ULCL from the session of the second UE based on the second session change information. The SMF serving the second UE may be the first SMF, or may be another SMF. Further, the second session change information sent by the first network element may include a forwarding policy of the first ULCL, an identifier of the second UE, or an identifier of a session of the second UE. The SMF serving the second UE sends the forwarding policy in the second session change information to the first ULCL, or the SMF serving the second UE generates the forwarding policy of the first ULCL based on the identifier of the second UE and/or the identifier of the session of the second UE in the second session change information, and then sends the forwarding policy to the first ULCL. The ULCL forwards a packet of the second UE according to the forwarding policy.

Alternatively, if an SMF serving the second UE determines that a first ULCL is added to or deleted from the session of the second UE, the SMF serving the second UE may send first session change information to the first network element, to indicate that the first ULCL is added to or deleted from the session of the second UE. After receiving the first session change information, the first network element may send second session change information to the first SMF, to indicate the first SMF to add the first ULCL to or delete the first ULCL from the session of the first UE. After receiving the second session change information, the first SMF adds the first ULCL to or deletes the first ULCL from the session of the first UE based on the second session change information. Further, the second session change information sent by the first network element may include a forwarding policy of the first ULCL, an identifier of the first UE, or an identifier of the session of the first UE. The first SMF sends the forwarding policy in the second session change information to the first ULCL, or the first SMF generates the forwarding policy of the first ULCL based on the identifier of the first UE and/or the identifier of the session of the first UE in the second session change information, and then sends the forwarding policy to the first ULCL. The first ULCL forwards a packet of the first UE according to the forwarding policy.

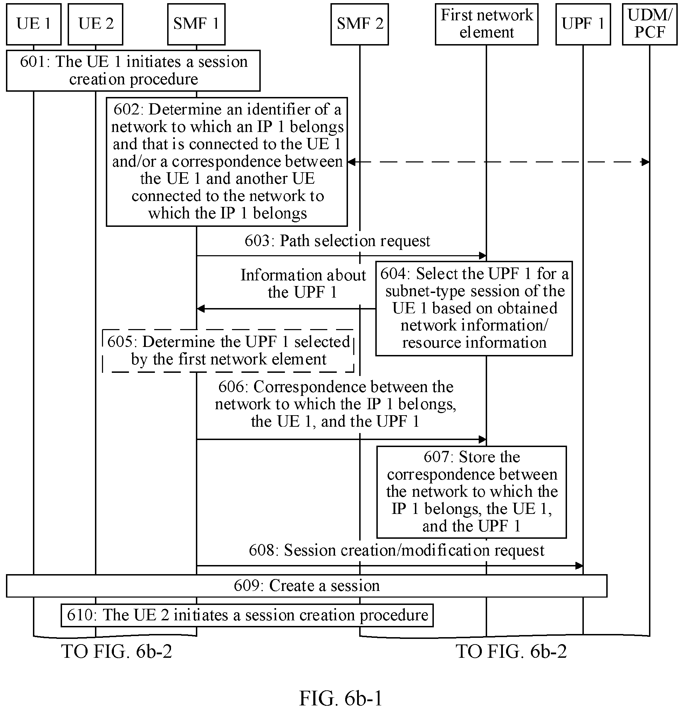

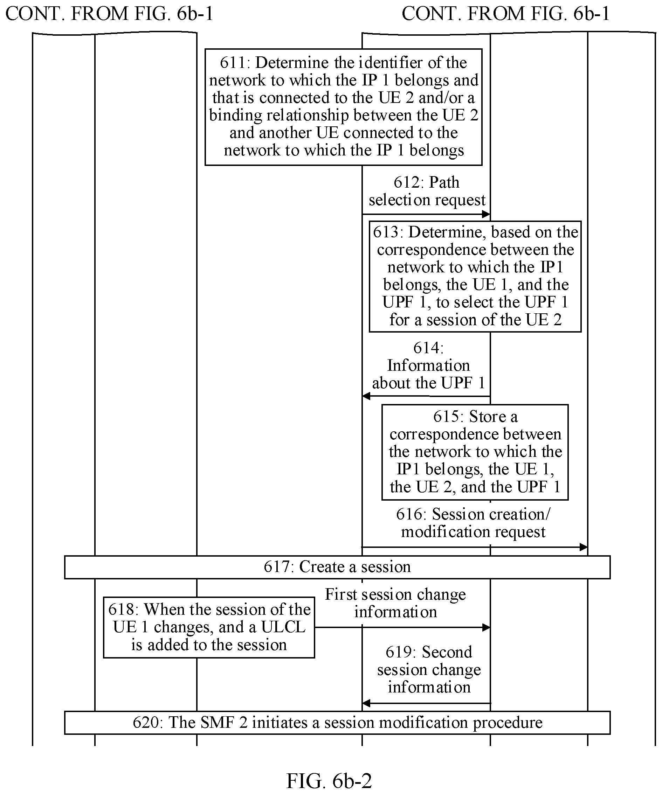

For clearer understanding of the foregoing embodiment of this application, the following provides descriptions by using examples with reference to FIG. 6a and FIG. 6b-1 and FIG. 6b-2. FIG. 6a is an example of a diagram of a scenario applicable to a communication path selection method according to an embodiment of this application. FIG. 6b-1 and FIG. 6b-2 are an example of a schematic flowchart of a communication path selection method. As shown in FIG. 6b-1 and FIG. 6b-2, the procedure may include the following steps.

Step 601: A UE 1 initiates a session creation procedure.

Optionally, a session creation request sent by the UE 1 may include one or more of the following information: an identifier of a network to which an IP 1 belongs and that is connected to the UE 1, an identifier of the UE 1 in the network to which the IP 1 belongs, a binding relationship between the UE 1 and another UE connected to the network to which the IP 1 belongs (for example, a binding relationship between the UE 1 and a UE 2), an identifier of the another UE connected to the network to which the IP 1 belongs, or indication information indicating to request to create a subnet-type session.

Step 602: An SMF 1 determines the identifier of the network to which the IP 1 belongs and that is connected to the UE 1 and/or a correspondence between the UE 1 and the another UE connected to the network to which the IP 1 belongs.

If the session creation request sent by the UE 1 includes the identifier of the network to which the IP 1 belongs and/or the correspondence between the UE 1 and the another UE connected to the network to which the IP 1 belongs, the SMF 1 may directly determine the correspondence based on the session creation request.

If the session creation request sent by the UE 1 does not include the identifier of the network to which the IP 1 belongs and the binding relationship between the UE 1 and the another UE connected to the network to which the IP 1 belongs, the SMF 1 may obtain subscription data of the UE 1 from a UDM or a PCF, and determine, based on the subscription data of the UE 1, the identifier of the network to which the IP 1 belongs and/or the correspondence between the UE 1 and the another UE connected to the network to which the IP 1 belongs.

Optionally, the correspondence may be a binding relationship between a plurality of UEs, or may be that a same identifier is configured for a plurality of UEs. For example, if both the UE 1 and the UE 2 are connected to the network to which the IP 1 belongs, the SMF 1 may configure a same subnet identifier for the UE 1 and the UE. In this case, UEs having a same subnet identifier have the foregoing correspondence.

Step 603: The SMF 1 sends a path selection request to a first network element.

The path selection request sent by the SMF 1 may include the identifier of the network to which the IP 1 belongs, routing information of the network to which the IP 1 belongs, or the identifier of the UE 1 in the network to which the IP 1 belongs. For example, the path selection request may include the routing information of the network to which the IP 1 belongs, and the routing information of the network to which the IP 1 belongs may be an IP address segment/address prefix of the network to which the IP 1 belongs.

Step 604: The first network element selects a UPF 1 for a subnet-type session of the UE 1 based on obtained network information/resource information, and sends information about the UPF 1 to the SMF 1.

The information about the UPF 1 may include an identifier of the UPF 1, a DNAI of the UPF 1, an identifier of an SMF that manages the UPF 1, and the like.

Step 605: The SMF 1 determines the UPF 1 selected by the first network element.

This step is optional. If the information about the UPF 1 sent by the first network element in step 604 is the DNAI of the UPF 1, the identifier of the SMF that manages the UPF 1, and the like, the SMF may determine the corresponding UPF 1 based on the DNAI, the identifier of the SMF that manages the UPF 1, and the like.

Step 606: The SMF 1 sends a correspondence between the network to which the IP 1 belongs, the UE 1, and the UPF 1 to the first network element.

This step is optional. The SMF sends the correspondence between the network to which the IP 1 belongs, the UE 1, and the UPF 1 to the first network element, so that the first network element selects a same UPF for another UE connected to the network to which the IP 1 belongs in a subsequent communication process.

Step 607: The first network element stores the correspondence between the network to which the IP 1 belongs, the UE 1, and the UPF 1.

Further, the first network element may further store a correspondence between the SMF 1, the network to which the IP 1 belongs, the UE 1, and the UPF 1.

Because step 606 is optional, when the SMF 1 does not perform step 606, the first network element does not perform step 607 either.

Step 608: The SMF 1 sends a session creation/modification request to the UPF 1.

The session creation/modification request may include the identifier of the network to which the IP 1 belongs, the binding relationship between the UE 1 and the another UE connected to the network to which the IP 1 belongs, or the like. Alternatively, the session creation/modification request may indicate to create a subnet-type session.

Step 609: The UE 1, the SMF 1, and the UPF 1 create a session.

Step 610: The UE 2 initiates a session creation procedure.

Step 611: An SMF 2 determines the identifier of the network to which the IP 1 belongs and that is connected to the UE 2 and/or a binding relationship between the UE 2 and another UE connected to the network to which the IP 1 belongs.

Step 612: The SMF 2 sends a path selection request to the first network element.

The session creation procedure initiated by the UE 2 is similar to the session creation procedure initiated by the UE 1. Therefore, for step 610 to step 612, refer to descriptions of step 601 to step 603.

Step 613: The first network element determines, based on the correspondence between the network to which the IP 1 belongs, the UE 1, and the UPF 1, to select the UPF 1 for a session of the UE 2.

Because both the UE 2 and the UE 1 are connected to the network to which the IP 1 belongs, when the UE 2 also creates a subnet-type session, the first network element may select a same UPF for the UE 1 and the UE 2.

Step 614: The first network element sends the information about the UPF 1 to the SMF 2.

The information about the UPF 1 may include the identifier of the UPF 1, the DNAI of the UPF 1, the identifier of the SMF that manages the UPF 1, and the like.

Step 615: The first network element stores a correspondence between the network to which the IP 1 belongs, the UE 1, the UE 2, and the UPF 1.

Further, the first network element may further store a correspondence between the SMF 1, the SMF 2, the network to which the IP 1 belongs, the UE 1, and the UPF 1.

Step 616: The SMF 2 sends a session creation/modification request to the UPF 1.

The session creation/modification request may include the identifier of the network to which the IP 1 belongs, the binding relationship between the UE 2 and the another UE connected to the network to which the IP 1 belongs, or the like. Alternatively, the session creation/modification request may indicate to create a subnet-type session.

Step 617: The UE 2, the SMF 2, and the UPF 1 create a session.

Step 618: When the session of the UE 1 changes, and a ULCL is added to the session, the SMF 1 sends first session change information to the first network element.

The first session change information indicates that the ULCL is added to the session of the UE 1. Optionally, the first session change information may further include an uplink/downlink packet forwarding policy of the ULCL.

Step 619: The first network element sends second session change information to the SMF 2.

After receiving the first session change information, the first network element learns that the ULCL is added to the session of the UE 1, and determines that the ULCL should also be added to the session of the UE 2. Therefore, the second network element sends the second session change information to the SMF 2, where the second session change information indicates to add the ULCL to the session of the UE 2.

In one aspect, the second session change information may include an identifier of the SMF 1 and the identifier of the UE 1. In this case, after receiving the second session change information, the SMF 2 may obtain the uplink/downlink packet forwarding policy of the ULCL from the SMF 1.

In another aspect, when the first session change information includes the uplink/downlink packet forwarding policy of the ULCL, the second session change information sent by the first network element may also include the uplink/downlink packet forwarding policy of the ULCL.

Step 620: The SMF 2 initiates a session modification procedure.

The SMF 2 may trigger session modification on the UE 2, the ULCL, and the UPF 1 according to the obtained uplink/downlink packet forwarding policy of the ULCL.

In the scenario shown in FIG. 1, for a packet sent from the network to which the IP 2 belongs and that is connected to the UPF 1 to the network to which the IP 1 belongs, the UPF 1 sends the packet from the network to which the IP 2 belongs to a device in the network to which the IP 1 belongs only via one of sessions of the UE 1 or the UE 2. The packet cannot be properly allocated to the sessions of the UE 1 and the UE 2, resulting in poor transmission efficiency.

In view of this, an embodiment of this application further provides a communication path selection method, to optimize a transmission path and improve transmission efficiency.

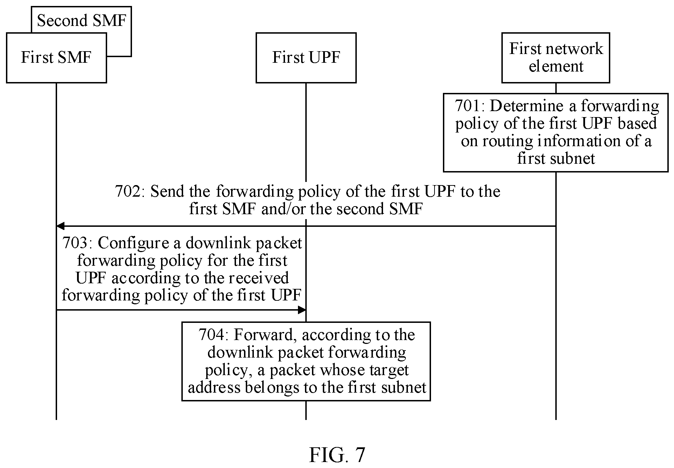

In this embodiment, both a first UE and a second UE access a mobile communication network and a same subnet. A first SMF manages a session of the first UE, and a second SMF manages a session of the second UE. The second SMF and the first SMF may be a same SMF, or may be different SMFs. In FIG. 7, different SMFs are used as an example. Before a procedure shown in FIG. 7 is performed, the first SMF has established a session for the first UE, and a first UPF forwards a packet of the first UE. The packet of the first UE includes a packet generated by the first UE, and also includes a packet that is from a first subnet and that is transmitted by the first UE. The second SMF has established a session for the second UE, and the first UPF forwards a packet of the second UE. The packet of the second UE includes a packet generated by the second UE, and also includes a packet that is from the first subnet and that is transmitted by the second UE. For a process of establishing the session for the first UE and the second UE and selecting the first UPF, refer to the UPF selection process in the embodiments shown in FIG. 5 and FIG. 6b-1 and FIG. 6b-2.

Because the packets of the first UE and the second UE are forwarded by the first UPF, for the first UPF, how to transmit, to the first subnet via the session of the first UE and the session of the second UE, a downlink packet whose target address belongs to the first subnet is a problem to be resolved by using the communication path selection method shown in FIG. 7.

A schematic flowchart of the communication path selection method shown in FIG. 7 may include the following steps.

Step 701: A first network element determines a forwarding policy of a first UPF based on routing information of a first subnet.

Optionally, the forwarding policy that is of the first UPF and that is determined by the first network element may include a correspondence between a session and an address in the first subnet. For example, the first network element determines that an IP address segment of the first subnet is xxx.xxx.x.0 to xxx.xxx.x.20, and the first network element may determine that a packet whose destination IP address is xxx.xxx.x.0 to xxx.xxx.x.10 is forwarded via a session of a first UE, and a packet whose destination IP address is xxx.xxx.x.11 to xxx.xxx.x.20 is forwarded via a session of a second UE. For another example, the first network element may alternatively determine that the forwarding policy of the first UPF is: forwarding a packet 1 whose destination address belongs to the first subnet via a session of a first UE, forwarding a packet 2 whose destination address belongs to the first subnet via a session of a second UE, forwarding a packet 3 whose destination address belongs to the first subnet via the session of the first UE, forwarding a packet 4 whose destination address belongs to the first subnet via the session of the second UE, and so on.

Optionally, the first network element may alternatively determine that the first UPF autonomously determines the downlink packet forwarding policy. In this case, the forwarding policy determined by the first network element includes indication information indicating that the first UPF makes a decision. Further, the first network element may further determine a basis for determining the downlink packet forwarding policy by the first UPF. For example, the first network element may determine that the first UPF determines the downlink packet forwarding policy based on traffic load balancing, address load balancing, a traffic proportion, and the like. In this case, the forwarding policy that is of the first UPF and that is determined by the first network element may further include indication information such as a traffic load balancing principle, the address load balancing, and the traffic proportion.

In a possible implementation, the routing information of the first subnet obtained by the first network element may be reported by one or more of the first UE, the second UE, and the first UPF.

The first UE, the second UE, and the first UPF may actively report the routing information of the first subnet based on a preset configuration. The first UE and the second UE may separately send the routing information of the first subnet to the first network element via a first SMF and a second SMF. The first UPF may send the routing information of the first subnet to the first network element via the first SMF and/or the second SMF, or the first UPF may directly send the routing information of the first subnet to the first network element. For example, when receiving an uplink or downlink packet of the first subnet, the first UE may read a source address or a destination address (that is, an address of a device in the first subnet) of the packet, and report read address information to the first network element. Alternatively, when receiving an uplink or downlink packet of the first subnet, the first UPF may read a source address or a destination address (that is, an address of a device in the first subnet) of the packet, and report read address information to the first network element. For another example, the first UE may further send a routing protocol packet of the first subnet to the first UPF, so that the first UPF reports the routing information of the first subnet.

Alternatively, the first UE, the second UE, and the first UPF may report the routing information of the first subnet based on indication information of an SMF. For example, when creating a session for the first UE, the first SMF may send reporting indication information to the first UE and/or the first UPF, to indicate to report the routing information of the first subnet. When creating a session for the second UE, the second SMF may also send reporting indication information to the second UE and/or the first UPF, to indicate to report the routing information of the first subnet. For another example, reporting indication information sent by the first SMF to the first UE may further indicate the first UE to send a routing protocol packet of the first subnet to the first UPF. The first UE sends the routing protocol packet of the first subnet to the first UPF based on the reporting indication information.

Step 702: The first network element sends the forwarding policy of the first UPF to the first SMF and/or the second SMF.

When the first SMF and the second SMF are a same SMF, the first network element only needs to send the forwarding policy of the first UPF to the SMF once, so that the first SMF (which is also the second SMF) configures the downlink packet forwarding policy for the first UPF according to the forwarding policy of the first UPF.

When the first SMF and the second SMF are different SMFs, the first network element may send the forwarding policy of the first UPF to the first SMF, and the first SMF configures a downlink packet forwarding policy for the first UPF. Alternatively, the first network element may send the forwarding policy of the first UPF to the second SMF, and the second SMF configures a downlink packet forwarding policy for the first UPF. Alternatively, the first network element may send the forwarding policy of the first UPF to the first SMF and the second SMF, and the first SMF and the second SMF separately configure a downlink packet forwarding policy for the first UPF.

When the first network element sends the forwarding policy of the first UPF to the first SMF and the second SMF, the first network element may send a same forwarding policy or different forwarding policies to the first SMF and the second SMF. For example, the forwarding policy that is of the first UPF and that is determined by the first network element is that a packet whose destination IP address is xxx.xxx.x.0 to xxx.xxx.x.10 is forwarded via a session of the first UE, and a packet whose destination IP address is xxx.xxx.x.11 to xxx.xxx.x.20 is forwarded via a session of the second UE. In this case, the first network element may send the forwarding policy of the first UPF to the first SMF: The packet whose destination IP address is xxx.xxx.x.0 to xxx.xxx.x.10 is forwarded via the session of the first UE. The first network element may send the forwarding policy of the first UPF to the second SMF: The packet whose destination IP address is xxx.xxx.x.11 to xxx.xxx.x.20 is forwarded via the session of the second UE.

Step 703: The first SMF and/or the second SMF configure/configures the downlink packet forwarding policy for the first UPF according to the received forwarding policy of the first UPF.

When the first network element sends the forwarding policy of the first UPF to the first SMF, the first SMF configures the downlink packet forwarding policy for the first UPF according to the received forwarding policy of the first UPF. The downlink packet forwarding policy configured by the first SMF is determined according to the forwarding policy that is of the first UPF and that is sent by the first network element. In other words, the first SMF generates, according to the forwarding policy that is of the first UPF and that is sent by the first network element, the downlink packet forwarding policy that can be parsed and executed by the first UPF.

When the first network element sends the forwarding policy of the first UPF to the second SMF, the second SMF configures the downlink packet forwarding policy for the first UPF according to the received forwarding policy of the first UPF. The downlink packet forwarding policy configured by the second SMF is determined according to the forwarding policy that is of the first UPF and that is sent by the first network element. In other words, the second SMF generates, according to the forwarding policy that is of the first UPF and that is sent by the first network element, the downlink packet forwarding policy that can be parsed and executed by the first UPF.

It should be understood that if the first network element does not send the forwarding policy of the first UPF to the first SMF, the first SMF does not perform step 703; if the first network element does not send the forwarding policy of the first UPF to the second SMF, the second SMF does not perform step 703; if the first SMF is different from the second SMF, and the first network element sends the forwarding policy of the first UPF to the first SMF and the second SMF, both the first SMF and the second SMF may perform step 703; or if the first SMF is the same as the second SMF, the first SMF (which is also the second SMF) configures the downlink packet forwarding policy for the first UPF only once.

Step 704: The first UPF forwards, according to the forwarding policy, a packet whose target address belongs to the first subnet.

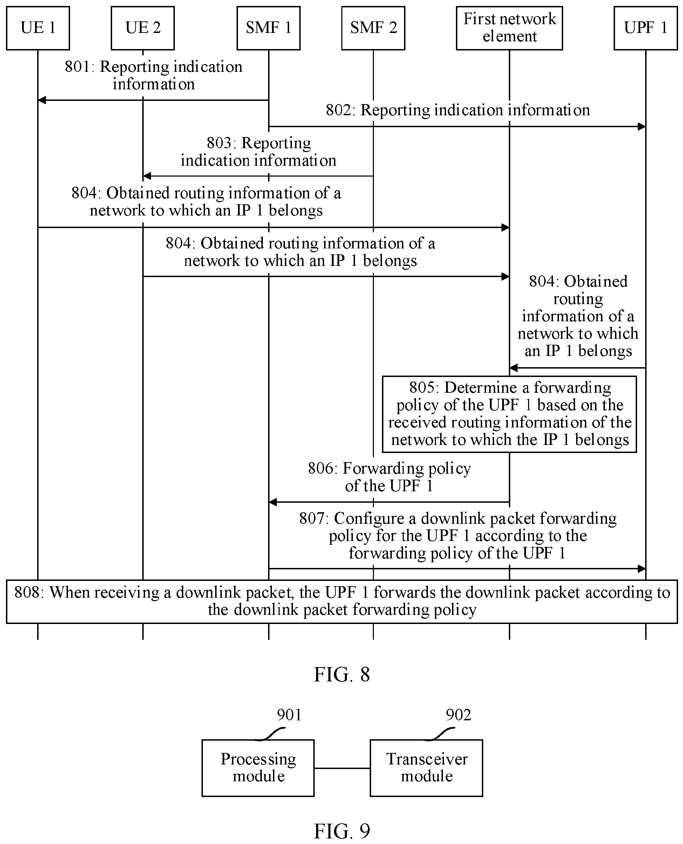

For clearer understanding of the foregoing embodiment of this application, the following provides descriptions by using an example with reference to FIG. 8. In a specific embodiment shown in FIG. 8, both a UE 1 and a UE 2 are connected to a network to which an IP 1 belongs, and both the UE 1 and the UE 2 access a 5GS. An SMF 1 manages a session of the UE 1, an SMF 2 manages a session of the UE 2, and a subnet-type session established by the UE 1 is forwarded by a UPF 1.

A procedure of a communication path selection method shown in FIG. 8 may include the following steps.

Step 801: The SMF 1 sends reporting indication information to the UE 1.

In a process in which the SMF 1 creates a session for the UE 1, the SMF 1 may send the reporting indication information to the UE 1, to indicate the UE 1 to report routing information of a connected subnet (that is, the network to which the IP 1 belongs). For example, the SMF 1 may include the reporting indication information in a user route selection policy (UE route selection policy, URSP).

The reporting indication information may further indicate a manner in which the UE 1 reports the routing information. For example, the reporting indication information may indicate the UE 1 to report, to the SMF 1, an IP address of the network to which the IP 1 belongs, so that the SMF 1 can report, to a first network element, the IP address of the network to which the IP 1 belongs. Alternatively, the reporting indication information may indicate the UE 1 to send, to the UPF 1, a routing protocol packet of the network to which the IP 1 belongs.

Step 801 is optional. A reporting policy of the routing information of the subnet may alternatively be preconfigured in the UE 1, and the SMF 1 may not send the reporting indication information to the UE 1.

Step 802: The SMF 1 sends reporting indication information to the UPF 1.

In the process in which the SMF 1 creates the session for the UE 1, the SMF 1 may send the reporting indication information to the UPF 1, to indicate the UPF 1 to report the routing information of the subnet (that is, the network to which the IP 1 belongs) connected to the UE 1.

In one aspect, the SMF in step 802 may alternatively be replaced with the SMF 2, that is, the SMF 2 sends the reporting indication information to the UPF 1.

In another aspect, step 802 may alternatively be replaced with: The SMF 1 or the SMF 2 indicates the UPF 1 to forward a downlink packet to an associated session based on the routing information.

Step 802 is optional. The reporting policy of the routing information of the subnet may alternatively be preconfigured in the UPF 1, and the SMF 1 or the SMF 2 may not send the reporting indication information to the UPF 1.

Step 803: The SMF 2 sends reporting indication information to the UE 2.

For a manner in which the SMF 2 sends the reporting indication information to the UE 2, refer to the manner in which the SMF 1 sends the reporting indication information to the UE 1 in step 801. Details are not described herein again.

Step 803 is optional. The reporting policy of the routing information of the subnet may alternatively be preconfigured in the UE 2, and the SMF 2 may not send the reporting indication information to the UE 2.

When step 801, step 802, and step 803 are performed, an execution sequence of step 801, step 802, and step 803 is not limited in this embodiment of this application.

Step 804: When obtaining the routing information of the network to which the IP 1 belongs, the UE 1/UE 2/UPF 1 sends the obtained routing information to the first network element via the SMF 1/SMF 2.

For example, when the UE 1 (or the UE 2) receives an uplink packet from the network to which the IP 1 belongs, the UE 1 (or the UE 2) may read a source IP address in the packet, and send the read source IP address to the first network element via the SMF 1 (or the SMF 2). Alternatively, when the UE 1 (or the UE 2) receives the routing protocol packet of the network to which the IP 1 belongs, the UE 1 may read information in the routing protocol packet, to obtain the routing information of the network to which the IP 1 belongs, and sends the information to the first network element via the SMF 1 (or the SMF 2).

For another example, when the UE 1 receives a downlink packet of the network to which the IP 1 belongs, the UE 1 (or the UE 2) may read a destination IP address in the packet, and send the read destination IP address to the first network element via the SMF 1 (or the SMF 2).

For still another example, when receiving an uplink (or downlink) packet of the network to which the IP 1 belongs, the UPF 1 may read a source IP address (or a destination IP address) in the packet, and send the read IP address to the first network element; or when receiving a routing protocol packet of the network to which the IP 1 belongs, the UPF 1 may read information in the routing protocol packet, to obtain routing information of the network to which the IP 1 belongs, and send the routing information to the first network element via the SMF 1 (or SMF 2).

Optionally, when sending the obtained routing information to the first network element, the UPF 1 may send the routing information to the first network element via the SMF 1/SMF 2, or may directly send the routing information to the first network element without using the SMF 1/SMF 2.

Step 805: The first network element determines a forwarding policy of the UPF 1 based on the received routing information of the network to which the IP 1 belongs.

For example, the forwarding policy that is of the UPF 1 and that is determined by the first network element is that a packet whose destination IP address is xxx.xxx.x.0 to xxx.xxx.x.10 is forwarded via a session of a first UE, and a packet whose destination IP address is xxx.xxx.x.11 to xxx.xxx.x.20 is forwarded via a session of a second UE.

For another example, the first network element may alternatively determine that the UPF 1 determines forwarding of a downlink packet based on traffic-based load balancing.

Step 806: The first network element sends the forwarding policy of the UPF 1 to the SMF 1.

In FIG. 8, an example in which the first network element sends the forwarding policy of the UPF 1 to the SMF 1 is used. In actual application, the first network element may alternatively send the forwarding policy of the UPF 1 to the SMF 2, or send the forwarding policy of the UPF 1 to the SMF 1 and the SMF 2.

Step 807: The SMF 1 configures a downlink packet forwarding policy for the UPF 1 according to the forwarding policy of the UPF 1.

In FIG. 8, an example in which the first network element sends the forwarding policy of the UPF 1 to the SMF 1 is used. Therefore, in the specific embodiment shown in FIG. 8, the SMF 1 configures the downlink packet forwarding policy for the UPF 1. When the first network element sends the forwarding policy of the UPF 1 to the SMF 2, the SMF 2 may configure the downlink packet forwarding policy for the UPF 1. When the first network element sends the forwarding policy of the UPF 1 to the SMF 1 and the SMF 2, the SMF 1 and the SMF 2 may configure the downlink packet forwarding policy for the UPF 1.

Step 808: When receiving the downlink packet, the UPF 1 forwards the downlink packet according to the downlink packet forwarding policy.

For example, the downlink packet forwarding policy configured by the SMF 1 indicates that a packet whose IP address is xxx.xxx.x.0 to xxx.xxx.x.10 is forwarded via a session of a first UE, and a packet whose destination IP address is xxx.xxx.x.11 to xxx.xxx.x.20 is forwarded via a session of a second UE. When receiving a downlink packet whose destination IP address is xxx.xxx.x.2, the UPF 1 forwards the downlink packet via the session of the UE 1. When receiving a downlink packet whose destination IP address is xxx.xxx.x.12, the UPF 1 forwards the downlink packet via the session of the UE 2.

FIG. 9 is a diagram of a communication apparatus according to an embodiment of this application. The communication apparatus includes a processing module 901 and a transceiver module 902. The processing module 901 is configured to implement data processing by the communication apparatus. The transceiver module 902 is configured to receive content between the communication apparatus and another unit or network element, or send content between the communication apparatus and another unit or network element. It should be understood that, the processing module 901 in this embodiment of this application may be implemented by a processor or a processor-related circuit component (or referred to as a processing circuit), and the transceiver module 902 may be implemented by a receiver/transmitter or a receiver/transmitter-related circuit component.

For example, the communication apparatus may be a communication apparatus device, or may be a chip used in a communication apparatus device or another combined device or component with a function of the communication apparatus device.

When the communication apparatus is a first network element, the processing module 901 receives, via the transceiver module 902, a first path selection request sent by a first session management network element, where the first path selection request is used to request the first network element to select a first user plane network element for a session of a first terminal device; selects the first user plane network element for the session of the first terminal device based on the first path selection request and obtained network information, where the network information includes routing information of a data network connected to at least one user plane network element or routing information of a subnet connected to the first terminal device; and sends, via the transceiver module 902, information about the selected first user plane network element to the first session management network element.

In addition, the foregoing modules may be further configured to support another process performed by the first network element in the embodiments shown in FIG. 3 to FIG. 8. For beneficial effects, refer to the foregoing descriptions. Details are not described herein again.

When the communication apparatus is a session management network element, the processing module 901 sends a first path selection request to a first network element via the transceiver module 902, where the first path selection request is used to request the first network element to select a first user plane network element for a session of a first terminal device, and the first path request includes information about a data network to be accessed by the first terminal device, or includes information about a subnet connected to the first terminal device; receives, via the transceiver module 902, information about the first user plane network element sent by the first network element; and creates the session for the first terminal device based on the information about the first user plane network element.

In addition, the foregoing modules may be further configured to support another process performed by the session management network element in the embodiments shown in FIG. 3 to FIG. 8. For beneficial effects, refer to the foregoing descriptions. Details are not described herein again.

When the communication apparatus is a terminal device, the processing module 901 sends a session creation request to a session management network element via the transceiver module 902, to cause the session management network element to determine a user plane network element and establish a session for the first terminal device, where the session creation request includes one or more of the following information: an identifier of a subnet connected to the first terminal device, an identifier of the first terminal device in the subnet, indication information indicating that a type of the session requested to be created is a subnet session, and an identifier of another terminal device connected to the subnet; and sends a packet from the subnet to the user plane network element via the transceiver module 902.

In addition, the foregoing modules may be further configured to support another process performed by the terminal device in the embodiments shown in FIG. 3 to FIG. 8. For beneficial effects, refer to the foregoing descriptions. Details are not described herein again.

When the communication apparatus is a user plane network element, the processing module 901 receives, via the transceiver module 902, a session creation or modification request sent by a first session management network element, where the first session creation or modification request includes an identifier of a subnet connected to a first terminal device, or includes indication information indicating that a to-be-created or to-be-modified session is a subnet-type session; and creates or modifies the session with the first terminal device based on the first session creation or modification request.

In addition, the foregoing modules may be further configured to support another process performed by the user plane network element in the embodiments shown in FIG. 3 to FIG. 8. For beneficial effects, refer to the foregoing descriptions. Details are not described herein again.

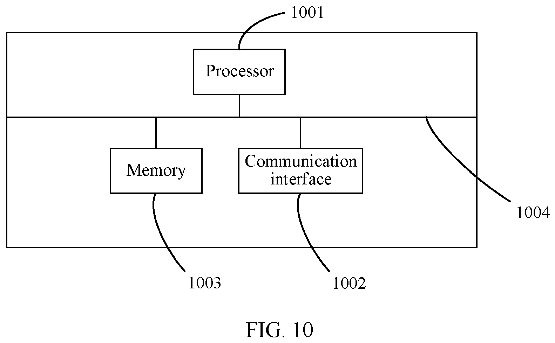

FIG. 10 is a diagram of another communication apparatus according to an embodiment of this application. The communication apparatus includes a processor 1001 and a communication interface 1002, and may further include a memory 1003 and a bus 1004. The processor 1001, the communication interface 1002, and the memory 1003 may be connected to each other through the bus 1004. The bus 1004 may be a peripheral component interconnect (peripheral component interconnect, PCI) bus, an extended industry standard architecture (extended industry standard architecture, EISA) bus, or the like. The bus 1004 may be classified into an address bus, a data bus, a control bus, and the like. For ease of representation, the bus is represented by using only one line in FIG. 10, but it does not mean that there is only one bus or only one type of bus.

The processor 1001 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. The memory 1003 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The processor 1001 is configured to implement a data processing operation of the communication apparatus. The communication interface 1002 is configured to implement a receiving operation and a sending operation of the communication apparatus.

When the communication apparatus is a first network element, the processor 1001 receives, through the communication interface 1002, a first path selection request sent by a first session management network element, where the first path selection request is used to request the first network element to select a first user plane network element for a session of a first terminal device; selects the first user plane network element for the session of the first terminal device based on the first path selection request and obtained network information, where the network information includes routing information of a data network connected to at least one user plane network element or routing information of a subnet connected to the first terminal device; and sends, through the communication interface 1002, information about the selected first user plane network element to the first session management network element.

In addition, the foregoing modules may be further configured to support another process performed by the first network element in the embodiments shown in FIG. 3 to FIG. 8. For beneficial effects, refer to the foregoing descriptions. Details are not described herein again.

When the communication apparatus is a session management network element, the processor 1001 sends a first path selection request to a first network element through the communication interface 1002, where the first path selection request is used to request the first network element to select a first user plane network element for a session of a first terminal device, and the first path request includes information about a data network to be accessed by the first terminal device, or includes information about a subnet connected to the first terminal device; receives, through the communication interface 1002, information about the first user plane network element sent by the first network element; and creates the session for the first terminal device based on the information about the first user plane network element.

In addition, the foregoing modules may be further configured to support another process performed by the session management network element in the embodiments shown in FIG. 3 to FIG. 8. For beneficial effects, refer to the foregoing descriptions. Details are not described herein again.

When the communication apparatus is a terminal device, the processor 1001 sends a session creation request to a session management network element through the communication interface 1002, to cause the session management network element to determine a user plane network element and establish a session for the first terminal device, where the session creation request includes one or more of the following information: an identifier of a subnet connected to the first terminal device, an identifier of the first terminal device in the subnet, indication information indicating that a type of the session requested to be created is a subnet session, and an identifier of another terminal device connected to the subnet; and sends a packet from the subnet to the user plane network element through the communication interface 1002.

In addition, the foregoing modules may be further configured to support another process performed by the terminal device in the embodiments shown in FIG. 3 to FIG. 8. For beneficial effects, refer to the foregoing descriptions. Details are not described herein again.

When the communication apparatus is a user plane network element, the processor 1001 receives, through the communication interface 1002, a session creation or modification request sent by a first session management network element, where the first session creation or modification request includes an identifier of a subnet connected to a first terminal device, or includes indication information indicating that a to-be-created or to-be-modified session is a subnet-type session; and creates or modifies the session with the first terminal device based on the first session creation or modification request.

In addition, the foregoing modules may be further configured to support another process performed by the user plane network element in the embodiments shown in FIG. 3 to FIG. 8. For beneficial effects, refer to the foregoing descriptions. Details are not described herein again.

Based on a same technical concept, an embodiment of this application further provides a communication system, including a first network element and a session management network element (for example, an SMF). Optionally, the communication system may further include a user plane network element (for example, a UPF), a terminal device (for example, a UE), and the like.

Based on a same technical concept, an embodiment of this application further provides a computer-readable storage medium. The computer-readable storage medium stores computer-readable instructions. When the computer-readable instructions are run on a computer, the method according to any one of the foregoing possible implementations is performed.

An embodiment of this application provides a computer program product including instructions. When the computer program product runs on a computer, the foregoing method embodiments are performed.

An embodiment of this application provides a chip, including a processor. The processor is coupled to a memory, the memory is configured to store instructions, and when the instructions are executed by the processor, the chip is enabled to implement the method steps performed by any one of the foregoing nodes.

An embodiment of this application provides a communication system. The communication system includes the terminal device, the radio access network device, and the access and mobility management network element.

In descriptions of embodiments of this application, the term "and/or" describes an association relationship between associated objects and indicates that three relationships may exist. For example, A and/or B may indicate the following three cases: Only A exists, both A and B exist, and only B exists. "A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence. Reference to "an embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "including", "comprising", "having", and their variants all mean "including but are not limited to", unless otherwise specifically emphasized in another manner.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may alternatively exist in a base station or terminal as discrete components.

All or some of the foregoing embodiments may be implemented by using software, hardware, firmware, or any combination thereof. When software is used to implement embodiments, all or some of the embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a dedicated computer, a computer network, a network device, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication path determining method, wherein the method comprises:
receiving, by a first network element, a first path selection request sent by a first session management network element, wherein the first path selection request is used to request the first network element to select a first user plane network element for a session of a first terminal device;
selecting, by the first network element, the first user plane network element for the session of the first terminal device based on the first path selection request and obtained network information, wherein the network information comprises routing information of a data network connected to at least one user plane network element or routing information of a subnet connected to the first terminal device; and
sending, by the first network element, information about the selected first user plane network element to the first session management network element.

2. The method according to claim 1, wherein selecting, by the first network element, the first user plane network element for the session of the first terminal device based on the first path selection request and the obtained network information comprises:
selecting, by the first network element, the first user plane network element for the session of the first terminal device based on the first path selection request, the obtained network information, and obtained resource information, wherein
the resource information comprises one or more of the following information: bandwidth between network elements, a delay between the network elements, a correspondence between the bandwidth and the delay between the network elements, and load information.

3. The method according to claim 1 or 2, wherein the network information further comprises one or more of the following information:
a correspondence between different user plane network elements and different session management network elements, address information of an application server in a data network, and a compute resource that can be provided by the application server in the data network.

4. The method according to any one of claims 1 to 3, wherein the method further comprises at least one of the following:
obtaining, by the first network element, the network information from a network data analytics function network element;
obtaining, by the first network element from the first user plane network element, routing information of a data network connected to the first user plane network element; and
obtaining, by the first network element from the first terminal device or the first user plane network element, the routing information of the subnet connected to the first terminal device.

5. The method according to any one of claims 1 to 4, wherein the information about the first user plane network element comprises at least one of the following:
an identifier of the user plane network element, an identifier of a session management network element that manages the user plane network element, and a data network access identifier DNAI of a data network to be accessed by the first terminal device.

6. The method according to any one of claims 1 to 5, wherein the first path selection request comprises one or more of the following information:
routing information of the data network to be accessed by the first terminal device, the DNAI of the data network to be accessed by the first terminal device, an identifier of a network slice to which the data network to be accessed by the first terminal device belongs, an identifier of the first user plane network element selected by the first session management network element for the first terminal device, location information of the first terminal device, an application that the first terminal device requests to access, a compute resource required by the first terminal device, and resource information required by the application that the first terminal device requests to access.

7. The method according to any one of claims 1 to 6, wherein the first path selection request comprises an identifier of the subnet connected to the first terminal device and/or an identifier of the first terminal device in the subnet.

8. The method according to claim 7, wherein selecting, by the first network element, the first user plane network element for the session of the first terminal device based on the first path selection request and the obtained network information comprises:
determining, by the first network element based on the identifier that is of the subnet and that is comprised in the first path selection request, a second user plane network element serving a session of a second terminal device, wherein the second terminal device is a terminal device accessing the subnet; and
using, by the first network element, the second user plane network element serving the session of the second terminal device as the first user plane network element serving the session of the first terminal device.

9. The method according to claim 7, wherein the method further comprises:
receiving, by the first network element, a second path selection request sent by a second session management network element, wherein the second path selection request is used to request the first network element to select a second user plane network element for a session of a second terminal device, and the second path request comprises the identifier of the subnet and/or an identifier of the second terminal device in the subnet;
using, by the first network element, the first user plane network element selected for the session of the first terminal device as the second user plane network element serving the session of the second terminal device; and
sending, by the first network element, information about the second user plane network element to the second session management network element.

10. The method according to claim 8 or 9, wherein the method further comprises:
receiving, by the first network element, first session creation or change information sent by the first session management network element, wherein the first session creation or change information indicates that an uplink classifier ULCL is added to the session of the first terminal device; and
sending, by the first network element, second session change information to the second session management network element, wherein the second session management network element is a session management network element that manages the session of the second terminal device, and the second session change information indicates to add the ULCL to the session of the second terminal device.

11. The method according to claim 10, wherein the second session change information comprises a forwarding policy of the ULCL, the identifier of the first terminal device, or an identifier of the first session management network element.

12. The method according to any one of claims 8 to 11, wherein the method further comprises:
receiving, by the first network element, third session change information sent by the second session management network element, wherein the second session management network element is a session management network element that manages the session of the second terminal device, and the third session change information indicates that a ULCL is added to the session of the second terminal device; and
sending, by the first network element, fourth session change information to the first session management network element, wherein the fourth session change information indicates to add the ULCL to the session of the first terminal device.

13. The method according to any one of claims 8 to 12, wherein the method further comprises:
determining, by the first network element, a forwarding policy of the first user plane network element based on the routing information of the subnet; and
sending, by the first network element, the forwarding policy to the first session management network element and/or the second session management network element, wherein the second session management network element is a session management network element that manages the session of the second terminal device.

14. The method according to claim 13, wherein the forwarding policy comprises:
a correspondence between each session and an address in the subnet; or
indication information indicating that the first user plane network element makes a decision.

15. A communication path determining method, wherein the method comprises:
sending, by a first session management network element, a first path selection request to a first network element, wherein the first path selection request is used to request the first network element to select a first user plane network element for a session of a first terminal device, and the first path request comprises information about a data network to be accessed by the first terminal device, or comprises information about a subnet connected to the first terminal device;
receiving, by the first session management network element, information about the first user plane network element sent by the first network element; and
creating, by the first session management network element, the session for the first terminal device based on the information about the first user plane network element.

16. The method according to claim 15, wherein the information about the data network comprises one or more of the following information:
routing information of the data network, a DNAI of the data network, an identifier of a network slice to which the data network belongs, an application that the first terminal device requests to access, a compute resource required by the first terminal device, and resource information required by the application that the first terminal device requests to access.

17. The method according to claim 15, wherein the information about the subnet comprises the identifier of the subnet and/or an identifier of the first terminal device in the subnet.

18. The method according to any one of claims 15 to 17, wherein the first path request further comprises an identifier of a second user plane network element selected by the first session management network element for the first terminal device, and/or location information of the first terminal device.

19. The method according to any one of claims 15 to 18, wherein the method further comprises:
determining, by the first session management network element, that a first uplink classifier ULCL is added to the session of the first terminal device; and
sending, by the first session management network element, first session change information to the first network element, wherein the first session change information indicates that the first ULCL is added to the session of the first terminal device.

20. The method according to any one of claims 15 to 19, further comprising:
receiving, by the first session management network element, second session change information sent by the first network element, wherein the second session change information indicates to add a second ULCL to the session of the first terminal device.

21. The method according to claim 20, wherein the second session change information comprises a forwarding policy of the second ULCL, an identifier of a second terminal device, or an identifier of a second session management network element;
the second terminal device is a terminal device accessing the subnet; and
the second session management network element is a session management network element that manages a session of the second terminal device.

22. The method according to any one of claims 15 to 21, wherein the method further comprises:
receiving, by the first session management network element, a forwarding policy of the first user plane network element sent by the first network element; and
configuring, by the first session management network element, a downlink packet forwarding policy for the first user plane network element according to the forwarding policy.

23. The method according to claim 22, wherein before receiving, by the first session management network element, the forwarding policy of the first user plane network element sent by the first network element, the method further comprises:
receiving, by the first session management network element, routing information of the subnet sent by the first terminal device and/or the first user network element; and
sending, by the first session management network element, the routing information of the subnet to the first network element.

24. The method according to claim 23, wherein before receiving, by the first session management network element, the routing information of the subnet sent by the first terminal device and/or the first user network element, the method further comprises:
sending, by the first session management network element, reporting indication information to the first terminal device and/or the first user plane network element, wherein the reporting indication information indicates to report the routing information of the subnet to the first session management network element.

25. The method according to any one of claims 22 to 24, wherein the forwarding policy of the first user plane network element sent by the first network element comprises:
a correspondence between each session and an address in the subnet; or
indication information indicating that the first user plane network element makes a decision.

26. A communication path determining method, wherein the method comprises:
sending, by a first terminal device, a session creation request to a first session management network element, to cause the first session management network element to determine a first user plane network element and establish a session for the first terminal device, wherein the session creation request comprises one or more of the following information: an identifier of a subnet connected to the first terminal device, an identifier of the first terminal device in the subnet, indication information indicating that a type of the session requested to be created is a subnet session, and an identifier of another terminal device connected to the subnet; and
sending, by the first terminal device, a packet from the subnet to the first user plane network element.

27. The method according to claim 26, wherein the method further comprises:
sending, by the first terminal device, routing information of the subnet to the first session management network element; or
sending, by the first terminal device, a routing protocol packet of the subnet to the first user plane network element.

28. The method according to claim 27, wherein the method further comprises:
receiving, by the first terminal device, reporting indication information sent by the first session management network element, wherein the reporting indication information indicates the first terminal device to report the routing information of the subnet to the first session management network element.

29. A communication path determining method, wherein the method comprises:
receiving, by a user plane network element, a session creation or modification request sent by a first session management network element, wherein the first session creation or modification request comprises an identifier of a subnet connected to a first terminal device, or comprises indication information indicating that a to-be-created or to-be-modified session is a subnet-type session; and
creating or modifying, by the user plane network element, the session with the first terminal device based on the first session creation or modification request.

30. The method according to claim 29, wherein the method further comprises:
receiving, by the user plane network element, a second session creation or modification request sent by the first session management network element, wherein the second session creation or modification request is used to create or modify a session of a second terminal device, and the second session creation or modification request comprises an identifier of the subnet, or comprises indication information indicating that the to-be-created or to-be-modified session is a subnet-type session;
creating or modifying, by the user plane network element, the session with the second terminal device based on the second session creation or modification request; and
sending, by the user plane network element, a downlink packet whose target address belongs to the subnet to the first terminal device via the session with the first terminal device, or sending the downlink packet to the second terminal device via the session with the second terminal device.

31. The method according to claim 29 or 30, wherein the method further comprises:
receiving, by the user plane network element, a downlink packet forwarding policy sent by the session management network element; and
sending, by the user plane network element, the downlink packet whose target address belongs to the subnet to the first terminal device via the session with the first terminal device, or sending the downlink packet to the second terminal device via the session with the second terminal device comprises:
sending, by the user plane network element according to the downlink packet forwarding policy, the downlink packet whose target address belongs to the subnet to the first terminal device via the session with the first terminal device, or sending the downlink packet to the second terminal device via the session with the second terminal device.

32. The method according to claim 31, wherein the downlink packet forwarding policy comprises: a correspondence between each session and an address in the subnet, or indication information indicating that the user plane network element makes a decision.

33. The method according to any one of claims 29 to 32, wherein the method further comprises:
obtaining, by the user plane network element, routing information of the subnet based on an uplink packet from the subnet; and
sending, by the user plane network element, the obtained routing information to the first session management network element, to cause the first session management network element to determine the downlink packet forwarding policy.

34. The method according to any one of claims 29 to 33, wherein the method further comprises:
receiving, by the user plane network element, reporting indication information sent by the first session management network element, wherein the reporting indication information indicates the user plane network element to report the obtained routing information of the subnet to the first session management network element.

35. A communication apparatus, comprising a processing module and a communication module, wherein the processing module is configured to send and receive a message via the communication module, to perform the method according to any one of claims 1 to 34.

36. A communication apparatus, comprising a processor, wherein the processor is coupled to a memory, the memory is configured to store a program or instructions, and when the program or the instructions are executed by the processor, the device is enabled to perform the method according to any one of claims 1 to 34.

37. A communication system, wherein the system comprises a communication apparatus configured to perform the method according to any one of claims 1 to 14, and a communication apparatus configured to perform the method according to any one of claims 15 to 25.

38. The system according to claim 37, wherein the system further comprises a communication apparatus configured to perform the method according to any one of claims 26 to 28, and/or a communication apparatus configured to perform the method according to any one of claims 29 to 34.

39. A chip, wherein the chip comprises a processor, the processor is coupled to a memory, the memory is configured to store instructions, and when the instructions are executed by the processor, the chip is enabled to implement the method according to any one of claims 1 to 14, or implement the method according to any one of claims 15 to 25, or implement the method according to any one of claims 26 to 28, or implement the method according to any one of claims 29 to 34.

40. A computer-readable storage medium, wherein the computer-readable storage medium stores instructions, and when the instructions are run on a computer, the computer is enabled to perform the method according to any one of claims 1 to 14, or perform the method according to any one of claims 15 to 25, or perform the method according to any one of claims 26 to 28, or perform the method according to any one of claims 29 to 34.

41. A computer program product comprising instructions, wherein when the computer program product runs on a computer, the computer is enabled to perform the method according to any one of claims 1 to 14, or perform the method according to any one of claims 15 to 25, or perform the method according to any one of claims 26 to 28, or perform the method according to any one of claims 29 to 34.
